# DEMANDE DE BREVET EUROPEEN

(11) **EP 0 716 321 A1**
(43) Date de publication de la demande: **12.06.1996**
(21) Numéro de dépôt: 95402701.7
(22) Date de dépôt: 30.11.1995
(51) Int. Cl.: G02B 6/13, H01L 21/311

(54) **Procédé pour former une couche d'arrêt en silicium pour un composant en optique intégrée**

(30) Priorité: 05.12.1994 FR 9414582
(71) Demandeur: ALCATEL N.V., NL-2288 BH Rijswijk (NL)
(72) Inventeur: Tregoat, Denis, F-91190 Gif sur Yvette (FR); Artigue, Claude, F-92340 Bourg la Reine (FR); Pommereau, Frederic, F-91220 Bretigny sur Orge (FR); Derouin, Estelle, F-91120 Palaiseau (FR)
(74) Mandataire: Fournier, Michel

(57) **Abrégé**

Au départ du procédé pour rapporter un composant une structure de base (10) inclue une couche de confinement inférieure (4) en silice et les coeurs (14) de futurs guides de lumière. Elle présente une butée d'alignement (16) pour qu'un composant à rapporter puisse être ultérieurement positionné en alignement avec ces guides.

Selon ce procédé on dépose une couche d'arrêt en silicium (8) sur cette butée. Ensuite on forme une couche de silice protectrice à une température inférieure à celle d'un dépôt de silice par hydrolyse à la flamme. Puis on dépose par hydrolyse à la flamme une couche de silice supérieure (12) pour constituer la couche de confinement supérieure des guides. Mais cette couche de silice recouvre aussi la butée d'alignement. C'est pourquoi on l'attaque ensuite par ions réactifs dans la région de la butée ce qui dégage la butée qui est protégée de cette attaque par la couche d'arrêt. Le composant à rapporter est alors positionné par appui sur cette butée.

## Description

La présente invention concerne notamment un procédé pour former une couche de silice à éliminer ultérieurement.

Un tel procédé est connu et va être tout d'abord décrit : le dépôt de la couche de silice à former est effectué sur une structure de base précédemment réalisée. La couche de silice alors déposée peut être appelée "couche de silice supérieure". Un traitement d'attaque de silice permet ultérieurement d'éliminer au moins localement cette couche. Il peut être utilisé pour éliminer totalement la couche de silice supérieure. Il sera alors effectué seulement après des opérations intermédiaires au cours desquelles cette couche aura été utile. Il permettra, après ces opérations intermédiaires, d'éliminer une couche devenue gênante. Il peut aussi, comme cela sera exposé plus loin, éliminer seulement des zones gênantes de la couche de silice supérieure tout en conservant des zones utiles de cette couche. De telles zones gênantes peuvent avoir été toujours inutiles. Leur existence résulte typiquement du fait que pour former les zones utiles la meilleure solution consiste à former d'abord une couche continue comportant aussi bien les zones gênantes que les zones utiles, puis à éliminer sélectivement les zones gênantes.

Dans un procédé connu pour la réalisation de composants d'optique intégrée pour des systèmes de télécommunication, la couche de silice supérieure est formée par le procédé de dépôt chimique en phase vapeur assisté par plasma (appelé internationalement PECVD d'après l'anglais Plasma Enhanced Chemical Vapor Deposition). Le traitement d'attaque est alors une gravure sèche telle que la gravure par ions réactifs (appelée internationalement RIE d'après l'anglais Reactive Ions Etching).

Il présente divers inconvénients. L'un d'eux est que ce traitement d'attaque peut endommager la structure de base, surtout si celle-ci est elle aussi constituée de silice. Un autre inconvénient est que la mise en oeuvre du procédé de dépôt de silice PECVD est relativement coûteuse, notamment plus coûteuse que celle d'un autre procédé de dépôt bien connu qui est le dépôt par hydrolyse à la flamme appelé internationalement FHD d'après l'anglais Flame Hydrolysis Deposition.

Le but de la présente invention est à la fois de protéger la structure de base et d'abaisser le coût du dépôt de la couche de silice supérieure. Elle se différencie du procédé connu ci-dessus par le fait que la structure de base est protégée du traitement d'attaque de silice par une couche d'arrêt constituée de silicium, la couche de silice supérieure étant déposée par hydrolyse à la flamme.

Selon cette invention, on utilise une couche d'arrêt constituée de silicium sur laquelle on forme une couche de silice protectrice à une température relativement basse et tout cas inférieure à celle nécessitée par le procédé d'hydrolyse à la flamme. Ceci permet de déposer la couche de silice supérieure par le procédé FHD sans risquer de détruire la couche de silicium par l'oxydation favorisée par les températures relativement élevées impliquées par ce procédé (1350°C).

A l'aide des figures schématiques ci-jointes, on va décrire plus particulièrement ci-après, à titre d'exemple non limitatif, comment la présente invention peut être mise en oeuvre. Lorsqu'un même élément est représenté sur plusieurs figures il y est désigné par le même signe de référence.

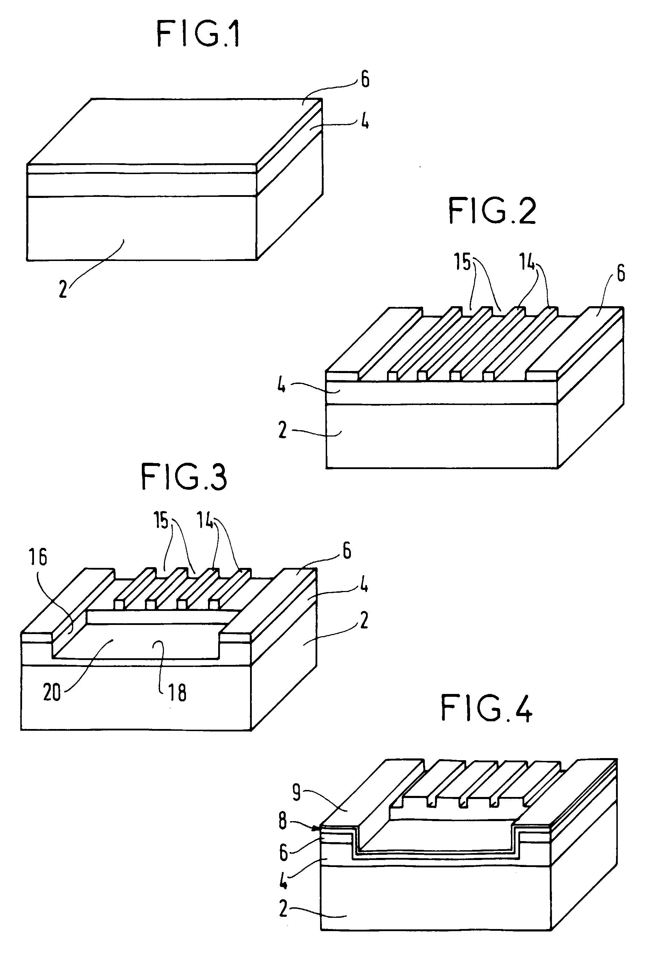

Les figures 1 à 9 représentent des étapes successives de la réalisation d'un dispositif d'optique intégrée avec mise en oeuvre de procédés selon la présente invention.

On va tout d'abord indiquer de manière générale quelques caractéristiques avantageuses du procédé pour former une couche de silice selon cette invention.

De préférence la couche d'arrêt présente une épaisseur comprise entre 100 nm et 1 000 nm, et de préférence encore entre 250 nm et 500 nm.

Après le dépôt de la couche d'arrêt et avant le dépôt de la couche de silice supérieure, une couche de silice protectrice est déposée sur la couche d'arrêt à une température inférieure à celle du dépôt de silice par hydrolyse à la flamme. La présence de cette couche protectrice a notamment comme conséquence que l'épaisseur de la couche d'arrêt n'a pas à être surdimensionnée pour compenser ses risques d'oxydation.

De préférence cette couche de silice protectrice est déposée par un procédé CVD assisté par plasma et son épaisseur est comprise entre 250 nm et 1000 nm.

On va maintenant décrire de manière générale le procédé pour rapporter un composant en optique intégrée selon la présente invention. Ce procédé trouve application lorsque le composant à rapporter doit être aligné sur un groupe de guidage optique, un tel groupe comportant au moins un coeur de guide enterré dans de la silice et typiquement plusieurs tels guides mutuellement parallèles tels que 14. Il inclue les étapes suivantes :
- définition d'un traitement d'attaque de silice propre à éliminer une couche de silice, ce traitement étant typiquement une attaque par ions réactifs,
- formation d'une structure de base incluant une couche de confinement inférieure en silice pour ce groupe, cette structure incluant aussi chaque coeur de guide et présentant une butée d'alignement pour l'alignement futur du composant à rapporter par rapport à ce groupe,
- dépôt sur la butée d'alignement d'une couche d'arrêt constituée de silicium pour résister audit traitement d'attaque par ions réactifs,
- formation sur la couche d'arrêt d'une couche de silice protectrice à une température inférieure à celle d'un dépôt de silice par hydrolyse à la flamme,
- dépôt d'une couche de silice supérieure sur la structure de base pour constituer une couche de confinement supérieure sur la couche de confinement inférieure et chaque coeur de guide et pour constituer ainsi ledit groupe de guidage optique, cette couche de silice recouvrant aussi la butée d'alignement, ce dépôt étant effectué par hydrolyse à la flamme,
- attaque localisée de la couche de silice supérieure par ledit traitement d'attaque de silice, cette attaque étant localisée dans la région de la butée pour y éliminer la couche de silice supérieure et faire ainsi apparaître la butée protégée par la couche d'arrêt,
- et mise en place du composant à rapporter avec alignement de ce composant par appui de ce composant sur la butée d'alignement.

Typiquement les coeurs de guides tels que 14 font saillies sur la couche de confinement inférieure dans la structure de base en y faisant apparaître des creux constitués par des intervalles entre coeurs (tels que 15). Le dépôt de la couche de silice supérieure comble ces intervalles entre coeurs avant de former la couche de confinement supérieure.

Ces intervalles entre coeurs présentent la forme de canaux avec une largeur typique de 250 µm et une profondeur typique de 10 µm. Un avantage important de la présente invention tient alors au fait que le procédé de dépôt de silice par hydrolyse à la flamme permet de combler ces intervalles d'une manière parfaite alors que le procédé de dépôt PECVD faisait parfois apparaître des hétérogéneités de la silice entre deux coeurs de guide, ce qui entraînait des pertes de lumière dans les guides du dispositif d'optique intégrée finalement réalisé.

On va maintenant décrire la réalisation d'un dispositif d'optique intégré, cette réalisation incluant la mise en oeuvre du procédé pour rapporter un composant selon la présente invention.

Le dispositif à réaliser doit comporter une barrette semiconductrice 60 incluant plusieurs lasers semiconducteurs. Ces lasers sont désignés par leurs rubans émetteurs enterrés tels que 62. Cette barrette constitue le composant à rapporter précédemment mentionné. Ce dispositif inclue aussi les guides optiques précédemment mentionnés, ces guides étant désignés par la référence de leurs coeurs tels que 14. Les rubans tels que 62 doivent respectivement être alignés sur les coeurs tels que 14. Pour cela, tout d'abord, lors de la réalisation de la barrette 60 et de la structure de base 10, on a assuré le parallélisme de ces rubans et celui de ces coeurs ainsi que leur répartition régulière avec un même pas. De plus la position du groupe de guidage optique constitué par ces coeurs a été définie avec précision par rapport aux butées latérales telles que 16 et au plancher 18, de même que la position du groupe des rubans émetteurs par rapport à des flancs de positionnement tels que 64 et à une face inférieure 66 de la barette 60. Ces positions ont été définies de manière que l'appui de ces flancs contre ces butées et de cette face inférieure sur ce plancher assure les alignements nécessaires.

La présente invention permet le moment venu, de réaliser cet appui de manière efficace.

Les étapes de la réalisation du dispositif d'optique intégrée sont les suivantes :

Conformément à la figure 1 on a réalisé un substrat de silicium 2. Sur ce substrat on a déposé, par exemple par le procédé FHD, une couche de confinement inférieure 4 constituée de silice pure, puis, sur la couche 4 par le même procédé, une couche de coeur 6 constituée d'une silice qui a été dopée pour augmenter son indice de réfraction.

Conformément à la figure 2 on a gravé la couche 6 pour faire apparaître les coeurs tels que 14 en saillie sur la couche de confinement inférieure 4.

Conformément à la figure 3 on a gravé cette dernière couche pour former un logement en creux 20 qui a un plancher 18 et dont les flancs latéraux constituent des butées telles que 16.

Conformément à la figure 4 on a déposé une couche d'arrêt 8 constituée de silicium.

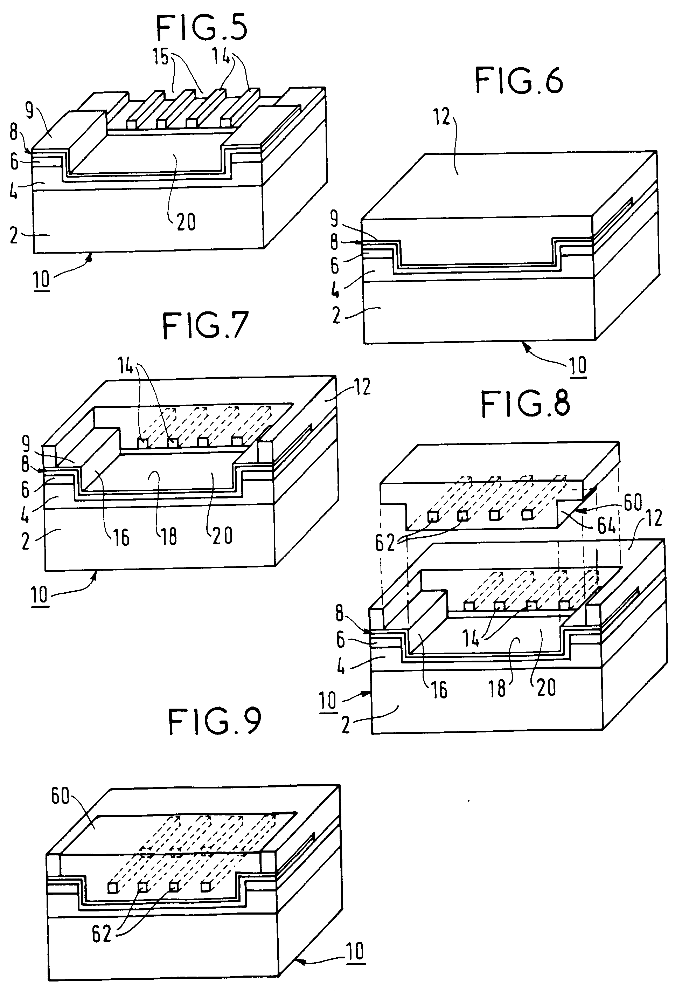

Conformément à la figure 5 on a gravé cette couche d'arrêt pour ne la laisser subsister que dans le logement 20 et sur les côtés de celui-ci.

Conformément à la figure 6 on a déposé la couche de silice supérieure 12. Ce dépôt a comblé d'abord des intervalles entre coeurs tels que 15. Puis il a formé une couche de confinement supérieure. Le groupe de guidage optique précédemment mentionné a été ainsi réalisé. Ce dépôt a malheureusement comblé aussi le logement 20.

Conformément à la figure 7, on a gravé la couche de silice supérieure 12 pour dégager le logement 20 et faire ainsi réapparaître des butées telles que 16 et le plancher 18.

Cette gravure a été effectuée par le procédé de gravure par ions réactifs. La couche d'arrêt 8 a protégé ces butées et ce plancher contre cette gravure.

Conformément à la figure 8 la barrette 60 a été mise dans son logement pour réaliser le dispositif d'optique intégrée représenté à la figure 9.

## Revendications

1. Procédé pour former une couche de silice à éliminer ultérieurement, ce procédé étant caractérisé par le fait qu'il inclut les étapes suivantes :
- définition d'un traitement d'attaque de silice propre à éliminer une couche de silice mais non une couche de silicium,
- dépôt d'une couche d'arrêt (8) en silicium sur une structure de base (10),
- formation sur la couche d'arrêt (8) d'une couche de silice protectrice (9) à une température inférieure à celle d'un dépôt de silice par hydrolyse à la flamme,
- et dépôt de la couche de silice à former, ce dépôt étant effectué par hydrolyse à la flamme sur ladite couche de silice protectrice (9), la couche de silice alors déposée constituant une couche de silice supérieure (12), grâce à quoi ledit traitement d'attaque permettra ultérieurement d'éliminer au moins localement la couche de silice supérieure sans endommager la structure de base.

2. Procédé selon la revendication 1, caractérisé par le fait que la couche d'arrêt (8) présente une épaisseur comprise entre 100 nm et 1 000 nm.

3. Procédé selon la revendication 1, caractérisé par le fait que la couche d'arrêt (8) présente une épaisseur comprise entre 250 nm et 500 nm.

4. Procédé selon l'une des revendications 1 à 3, caractérisé par le fait que la couche de silice protectrice (9) présente une épaisseur comprise entre 250 nm et 1000 nm.

5. Procédé pour rapporter un composant en optique intégrée, le composant à rapporter (60) devant être aligné sur un groupe de guidage optique comportant au moins un coeur de guide (14) enterré dans de la silice, ce procédé étant caractérisé par le fait qu'il inclut les étapes suivantes :
- définition d'un traitement d'attaque de silice propre à éliminer une couche de silice mais non une couche de silicium,
- formation d'une structure de base (10) incluant une couche de confinement inférieure (4) en silice pour le groupe de guidage optique, cette structure incluant aussi chaque coeur de guide de ce groupe et présentant une butée d'alignement (16) pour l'alignement futur du composant à rapporter par rapport à ce groupe,
- dépôt sur la butée d'alignement d'une couche d'arrêt (8) en silicium,
- formation sur la couche d'arrêt (8) d'une couche de silice protectrice (9) à une température inférieure à celle d'un dépôt de silice par hydrolyse à la flamme,
- dépôt d'une couche de silice supérieure (12) par hydrolyse à la flamme sur la structure de base pour constituer une couche de confinement supérieure sur la couche de confinement inférieure et chaque coeur de guide et pour constituer ainsi le groupe de guidage optique, cette couche de silice recouvrant aussi la butée d'alignement,
- attaque localisée de la couche de silice supérieure par ledit traitement d'attaque de silice, cette attaque étant localisée dans la région de la butée pour y éliminer la couche de silice supérieure et faire ainsi apparaître la butée protégée par la couche d'arrêt,
- et mise en place du composant à rapporter avec alignement de ce composant par appui de ce composant sur la butée d'alignement.

6. Procédé selon la revendication 5 dans lequel le groupe de guidage optique comporte une pluralité de coeurs de guides (14) s'étendant parallèlement les uns aux autres, ces coeurs faisant saillies sur la couche de confinement inférieure (4) dans la structure de base (10) en y faisant apparaître des creux constitués par des intervalles entre coeurs (15), le dépôt de la couche de silice supérieure (12) comblant ensuite ces intervalles entre coeurs avant de constituer la couche de confinement supérieure.
